# EUROPÄISCHE PATENTSCHRIFT

(11) **EP 1 401 625 B1**
(45) Veröffentlichungstag und Bekanntmachung des Hinweises auf die Patenterteilung: **09.08.2006**
(21) Anmeldenummer: 02701203.8
(22) Anmeldetag: 18.01.2002
(51) Int. Cl.: B29C 31/00

(54) **TREIBMITTELLEITUNG FÜR EINE SAUGSTRAHLPUMPE UND ZWEI VERFAHREN ZUR HERSTELLUNG DER TREIBMITTEILLEITUNG**
PUMP FLUID PIPE FOR AN EJECTOR PUMP AND TWO METHODS FOR PRODUCING SAID PUMP FLUID PIPE
CONDUITE D'UN AGENT MOTEUR DESTINEE A UN EJECTEUR ET DEUX PROCEDES DE PRODUCTION DE CETTE CONDUITE D'AGENT MOTEUR

(30) Priorität: 19.01.2001 DE 10117968
(43) Veröffentlichungstag der Anmeldung: 31.03.2004
(73) Patentinhaber: SIEMENS AKTIENGESELLSCHAFT, 80333 München (DE)
(72) Erfinder: ECK, Karl, 60318 Frankfurt (DE); KELLER, Dieter, 63743 Aschaffenburg (DE)
(86) Internationale Anmeldenummer: PCT/DE2002/000142
(87) Internationale Veröffentlichungsnummer: WO 2002/057061

(56) Entgegenhaltungen:
- DE-A- 3 913 109
- DE-A1- 3 941 892
- DE-C- 3 612 194
- DATABASE WPI Section Ch, Week 199412 Derwent Publications Ltd., London, GB; Class A32, AN 1994-097352 XP002198482 -& JP 06 047764 A (NIFCO INC), 22. Februar 1994 (1994-02-22) & PATENT ABSTRACTS OF JAPAN & JP 06 047764 A (NIFCO), 22. Februar 1994 (1994-02-22)
- HABERSTROH E ET AL: "LST-GIT: MOEGLICHKEITEN UND GRENZEN" , KUNSTSTOFFBERATER, KUNSTSTOFF VERLAG. ISERNHAGEN, DE, VOL. 45, NR. 7/8, PAGE(S) 31-34 XP000959333 ISSN: 0172-6374 Seite 31, Absatz 5 Seite 32, Absatz 2
- PATENT ABSTRACTS OF JAPAN vol. 1997, no. 07, 31. Juli 1997 (1997-07-31) -& JP 09 085768 A (BANDO CHEM IND LTD), 31. März 1997 (1997-03-31)

## Beschreibung

Die Erfindung betrifft eine Saugstrahlpumpe mit einer Treibmittelleitung und einem Anschlussstück zum Anschluss einer weiterführenden Anschlussleitung, mit einer zur Montage vor einem Mischrohr der Saugstrahlpumpe vorgesehenen Düse und mit einem Bogenstück zur Verbindung des Anschlussstücks mit der Düse. Weiterhin betrifft die Erfindung ein vorteilhaftes Verfahren zur Herstellung der Saugstrahlpumpe mit einer Treibmittelleitung aus einem Kunststoff, bei dem geschmolzener Kunststoff in eine vorgesehene Werkstückform eingebracht wird. Weiterhin betrifft die Erfindung ein Verfahren zur Herstellung der Saugstrahlpumpe mit einer Treibmittelleitung aus Kunststoff, bei dem ein schlauchförmiger Rohling in einer Werkstückform aufgeblasen wird.

Solche Saugstrahlpumpen mit Treibmittelleitungen werden zum Fördern von Kraftstoff innerhalb von Kraftstoffbehältern heutiger Kraftfahrzeuge häufig eingesetzt und sind aus der Praxis bekannt. Die Anschlussleitung führt dabei zu einer Vorlaufleitung einer Kraftstoffpumpe oder zu einer Rücklaufleitung, über die Kraftstoff von einer Brennkraftmaschine des Kraftfahrzeuges in den Kraftstoffbehälter zurückgeführt wird. Die Saugstrahlpumpe dient dazu, Kraftstoff von einer Kammer des Kraftstoffbehälters in eine andere Kammer oder in einen Schwalltopf zu fördern. Das Bogenstück ist hierbei für eine einfache Montage der Anschlussleitung auf dem Anschlussstück und auf die Platzverhältnisse in dem Kraftstoffbehälter angepasst. Das Bogenstück ist meist wellenförmig gestaltet oder hat eine 90° oder 180° Biegung. Bei der aus der Praxis bekannten Treibmittelleitung wird das Bogenstück als einzelnes Bauteil durch eine Verschweißung zweier im Spritzgussverfahren gefertigter Halbschalen hergestellt. Anschließend wird das Bogenstück gegen die Düse vorgespannt.

Nachteilig hierbei ist, dass eine Strömung von Kraftstoff in der Treibmittelleitung stark verwirbelt wird. Hierdurch hat die mit der Treibmittelleitung versehene Saugstrahlpumpe einen sehr geringen Wirkungsgrad.

Das Dokument DE-3941892-A offenbart eine Saugstrahlpumpe gemäß dem Oberbegriff des Anspruchs 1.

Es ist weiterhin aus der JP 06047764 A eine Kraftstoff-Rücklaufleitung bekannt, die zwei Enden mit unterschiedlichen Innendurchmessern aufweist, wobei der kleinere Innendurchmesser mittels eines Bohrverfahrens gefertigt wird.

Der Erfindung liegt das Problem zugrunde, eine Saugstrahlpumpe mit einer Treibmittelleitung der eingangs genannten Art so zu gestalten, dass in ihr Strömungen an Kraftstoff besonders verwirbelungsfrei geführt werden. Weiterhin sollen zwei möglichst einfache und kostengünstige Verfahren zur Herstellung der Saugstrahlpumpe geschaffen werden.

Das erstgenannte Problem wird erfindungsgemäß dadurch gelöst, dass die Düse, das Bogenstück und das Anschlussstück einteilig aus Kunststoff gefertigt sind.

Durch diese Gestaltung hat die Treibmittelleitung der erfindungsgemäßen Saugstrahlpumpe keine Absätze zwischen dem Bogenstück und der Düse, so dass an dieser Stelle die Strömung des Kraftstoffs nicht verwirbelt wird. Daher gelangt dank der Erfindung Kraftstoff mit geringen Strömungsverlusten von dem Anschlussstück zu der Düse. Hierdurch hat die mit der Treibmittelleitung versehene Saugstrahlpumpe einen besonders hohen Wirkungsgrad. Weiterhin wird eine Drallbildung der Strömung im Bereich zwischen der Düse und dem Bogenstück zuverlässig vermieden, was zu einer weiteren Erhöhung des Wirkungsgrades der Saugstrahlpumpe mit der Treibmittelleitung führt.

Zur weiteren Verringerung von Verwirbelungen in der erfindungsgemäßen Treibmittelleitung trägt es bei, wenn die Innenseite des Bogenstücks und der Düse nahtfrei gestaltet ist.

Zur Vereinfachung der Montage der Treibmittelleitung trägt es bei, wenn das Bogenstück und/oder die Düse einteilig mit zur Verbindung mit angrenzenden Bauteilen vorgesehenen Rastelementen und Halteelementen gefertigt ist.

Das zweitgenannte Problem, nämlich die Schaffung eines möglichst einfachen und kostengünstigen Verfahrens zur Herstellung der Saugstrahlpumpe mit einer Treibmittelleitung aus Kunststoff, wird erfindungsgemäß dadurch gelöst, dass der Querschnitt der Werkstückform zumindest an einem Ende mit dem geschmolzenen Kunststoff vollständig ausgefüllt wird und dass nach einer Abkühlung des Kunststoffs an der Wandung der Werkstückform im Kernbereich der Werkstückform befindlicher flüssiger Kunststoff von einem gasförmigen oder flüssigen Medium mit hohem Druck herausgedrückt wird.

Durch dieses Verfahren lassen sich nahezu beliebig gestaltete Biegungen und Querschnittsänderungen in der Treibmittelleitung herstellen. Eine Schweißung von Schalenteilen der Treibmittelleitung wie bei dem bekannten Verfahren ist dank der Erfindung nicht erforderlich. Das Verfahren hat hierdurch besonders wenige Arbeitsgänge und lässt sich daher insbesondere in einer Serienfertigung wie bei Saugstrahlpumpen für Kraftfahrzeuge sehr kostengünstig anwenden. Ein weiterer Vorteil dieser Gestaltung besteht darin, dass die Innenwandung der gesamten Treibmittelleitung von der Strömung des Mediums geformt wird und daher keine Nahtstellen hat. Hierdurch werden Verwirbelungen der Strömung von Kraftstoff innerhalb der mit dem erfindungsgemäßen Verfahren erzeugten Treibmittelleitung besonders gering gehalten. Bei hohen Anforderungen an Außenmaße der Treibmittelleitung kann die Werkstückform zunächst komplett mit flüssigem Kunststoff ausgefüllt werden. Hierdurch lassen sich zudem auch Halteelemente und Rastelemente fertigen.

Das letztgenannte Problem, nämlich die Schaffung eines zweiten einfachen und kostengünstigen Verfahrens zur Herstellung der Saugstrahlpumpe mit einer Treibmittelleitung, wird erfindungsgemäß dadurch gelöst, dass der Rohling mit der Länge der Treibmittelleitung hergestellt und vor dem Aufblasen in der Werkstückform außerhalb der Werkstückform der Treibmittelleitung entsprechend vorgeformt wird.

Durch dieses erfindungsgemäße Verfahren lässt sich eine gleichmäßige Wandstärke der Treibmittelleitung sicherstellen. Dies führt zu einem besonders geringen Materialeinsatz bei der Herstellung der Treibmittelleitung. Die mit diesem Verfahren gefertigte Treibmittelleitung hat eine besonders glatte Innenwandung. Hierdurch werden Verwirbelungen der Strömung an Kraftstoff innerhalb der Treibmittelleitung besonders gering gehalten. Um den Rohling vorzuformen, kann dieser bei Bedarf zonenweise erwärmt werden. Anschließend lässt sich der vorgeformte Rohling in der Form zu der Treibmittelleitung umformen.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: einen Längsschnitt durch eine Treibmittelleitung der erfindungsgemäßen Saugstrahlpumpe,
- Fig.2: einen in einer Werkstückform für die Treibmittelleitung eingebrachten, flüssigen Kunststoff vor einem Ausblasen des Kernbereichs,
- Fig.3: einen schlauchförmigen Rohling von einer Werkstückform für eine weitere Ausführungsform der Treibmittelleitung.

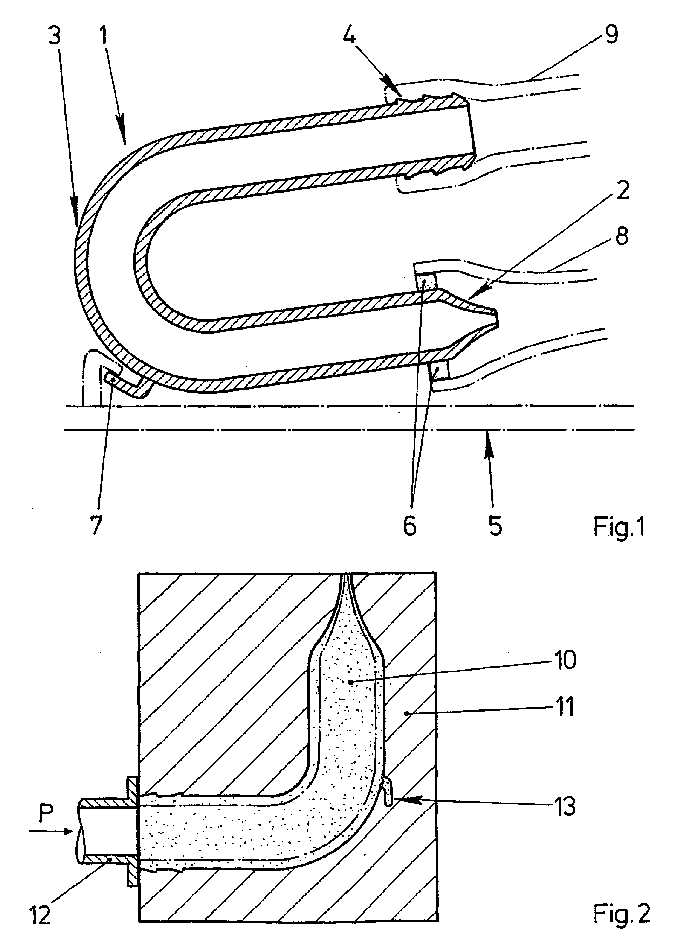

Figur 1 zeigt eine Treibmittelleitung 1 mit einer Düse 2, einem Bogenstück 3 und einem Anschlußstück 4 im Längsschnitt und strichpunktiert angrenzende Bauteile eines Kraftstoffbehälters 5. Die Treibmittelleitung 1 ist einteilig aus Kunststoff gefertigt. Auf der Außenseite des Bogenstücks 3 sind Halteelemente 6 und Rastelemente 7 angeordnet. Weiterhin zeigt Figur 1 strichpunktiert ein gegenüber der Düse 2 ausgerichtetes Mischrohr 8 einer in dem Kraftstoffbehälter 5 angeordneten Saugstrahlpumpe. Die Saugstrahlpumpe dient beispielsweise zur Förderung von Kraftstoff von einer Kammer des Kraftstoffbehälters 5 zu einer zweiten Kammer oder in einen Schwalltopf. Im montierten Zustand der Saugstrahlpumpe ist auf dem Anschlußstück 4 eine ebenfalls strichpunktiert dargestellte Leitung 9 aufgesteckt. Bei der Leitung 9 kann es sich beispielsweise um einen Abzweig einer Förderleitung einer Kraftstoffpumpe handeln.

Figur 2 zeigt eine mit geschmolzenem Kunststoff 10 gefüllte Werkstückform 11 für eine weitere Ausführungsform der Treibmittelleitung während ihrer Herstellung. An einem Ende der Werkstückform 11 ist eine Druckleitung 12 angeschlossen. Bei einem Abkühlen des Kunststoffs 10 in der Form verfestigt sich zuerst dessen Randbereich. Dieser Randbereich bildet die herzustellende Treibmittelleitung und ist in der Zeichnung strichpunktiert dargestellt. Bei einer vorgesehenen Stärke des Randbereichs wird über die Druckleitung 12 mit hohem Druck ein Gas in die Werkstückform 11 gepreßt. Dieses Gas drückt den noch flüssigen, im Kernbereich befindlichen Kunststoff 10 zum anderen Ende aus der Werkstückform 11 heraus. Anschließend kann die Treibmittelleitung der Werkstückform 11 entnommen werden. Die Außenkontur der Treibmittelleitung läßt sich mit diesem Verfahren nahezu beliebig gestalten und mit Rastelementen 13 versehen.

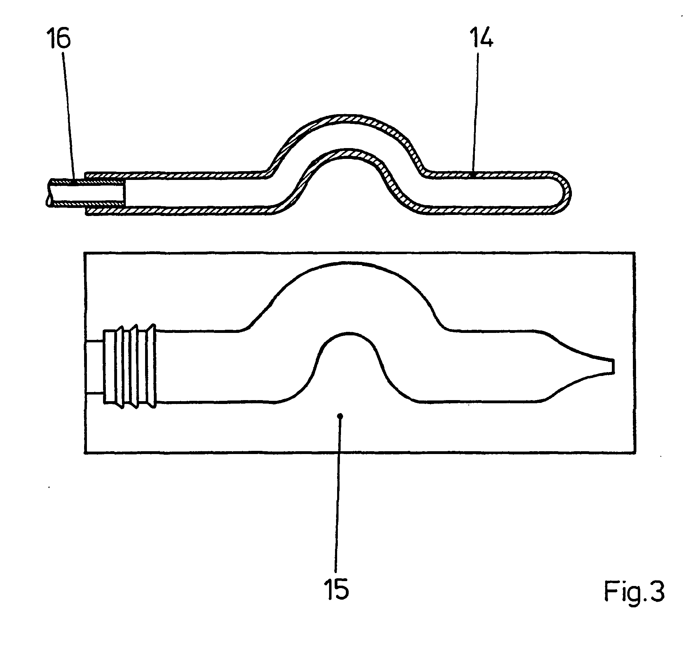

Figur 3 zeigt einen schlauchförmigen Rohling 14 und eine Hälfte einer Werkstückform 15 für eine weitere Ausführungsform der Treibmittelleitung. Der Rohling 14 erstreckt sich über die gesamte Länge der Werkstückform 15 und ist entsprechend der zu erzeugenden Treibmittelleitung vorgeformt. Der Rohling 14 ist zudem auf eine Druckleitung 16 aufgesteckt und läßt sich in einem weiteren Arbeitsgang in die Werkstückform 15 einsetzen. Anschließend wird der Rohling 14 über die Druckleitung 16 aufgeblasen, bis er gleichmäßig an der Innenwandung der Werkstückform 15 anliegt. Nach einer Entnahme des aufgeblasenen Rohlings 14 aus der Werkstückform 15 sind zur Fertigstellung der Treibmittelleitung ihre Enden nachzuarbeiten.

## Patentansprüche

1. Saugstrahlpumpe mit einer Treibmittelleitung, wobei die Treibmittelleitung mit einem Anschlussstück zum Anschluss einer weiterführenden Anschlussleitung, mit einer zur Montage vor einem Mischrohr der Saugstrahlpumpe vorgesehenen Düse und mit einem Bogenstück zur Verbindung des Anschlussstücks mit der Düse ausgebildet ist, **dadurch gekennzeichnet , dass** die Düse (2), das Bogenstück (3) und das Anschlussstück (4) einteilig aus Kunststoff gefertigt sind.

2. Saugstrahlpumpe nach Anspruch 1, **dadurch** ge- kennzeichnet , dass die Innenseite des Bogenstücks (3) und der Düse (2) nahtfrei gestaltet ist.

3. Saugstrahlpumpe nach Anspruch 1 oder 2, **dadurch gekennzeichnet , dass** das Bogenstück (3) und/oder die Düse (2) einteilig mit zur Verbindung mit angrenzenden Bauteilen vorgesehenen Rastelementen (7, 13) und Halteelementen (6) gefertigt ist.

4. Verfahren zur Herstellung der Saugstrahlpumpe mit einer Treibmittelleitung nach einem der Ansprüche 1 bis 3, bei dem geschmolzener Kunststoff in eine vorgesehene Werkstückform eingebracht wird, wobei die Werkstückform vollständig mit dem geschmolzenen Kunststoff ausgefüllt wird und dass nach einer Abkühlung des Kunststoffs an der Wandung der Werkstückform im Kernbereich der Werkstückform befindlicher flüssiger Kunststoff von einem gasförmigen oder flüssigen Medium mit hohem Druck herausgedrückt wird.

5. Verfahren zur Herstellung der Saugstrahlpumpe mit einer Treibmittelleitung nach einem der vorhergehenden Ansprüche 1 bis 3, bei dem ein schlauchförmiger Rohling der Treibmittelleitung innerhalb einer Werkstückform aufgeblasen wird, wobei der Rohling mit der Länge der Treibmittelleitung hergestellt und vor dem Aufblasen in der Werkstückform außerhalb der Werkzeugform der Treibmittelleitung entsprechend vorgeformt wird.

## Claims

1. Suction jet pump having a fuel line, the fuel line being designed with a connection piece for connection of a connection line which leads onward, with a nozzle, which is intended to be mounted upstream of a mixer tube of the suction jet pump, and with a bend piece for connecting the connection piece to the nozzle, **characterized in that** the nozzle (2), the bend piece (3) and the connection piece (4) are produced integrally from plastics.

2. Suction jet pump according to Claim 1, **characterized in that** the inner side of the bend piece (3) and of the nozzle (2) is designed to be seamless.

3. Suction jet pump according to Claim 1 or 2, **characterized in that** the bend piece (3) and/or the nozzle (2) are produced integrally with latching elements (7, 13) and holding elements (6) which are intended for connection to adjoining components.

4. Process for producing the suction jet pump having a fuel line according to one of Claims 1 to 3, in which molten plastic is introduced into a mould provided for this purpose, the mould being completely filled with the molten plastic, and, after the plastic at the wall of the mould has cooled, liquid plastic located in the core region of the mould being forced out by a high-pressure gaseous or liquid medium.

5. Process for producing the suction jet pump having a fuel line according to one of the preceding Claims 1 to 3, in which a blank of the fuel line, which is in the form of a flexible tube, is inflated inside a mould, the blank being produced to have the same length as the fuel line and, before being inflated in the mould, being preshaped to match the fuel line outside the mould.

## Revendications

1. Pompe à jet aspirant avec une conduite de fluide moteur, où la conduite de fluide moteur est conçue avec un embout permettant de raccorder une conduite de raccordement, avec un gicleur prévu pour être monté devant un tube mélangeur de la pompe à jet aspirant et avec une pièce coudée pour le raccordement de l'embout sur le gicleur, **caractérisée en ce que** le gicleur (2), la pièce coudée (3) et l'embout (4) sont fabriqués en une seule pièce en matière plastique.

2. Pompe à jet aspirant selon la revendication 1 caracté- risée en ce que la face intérieure de la pièce coudée (3) et du gicleur (2) est sans bavure.

3. Pompe à jet aspirant selon la revendication 1 ou 2 c a - ractérisée en ce que la pièce coudée (3) et/ou le gicleur (2) sont fabriqués en une seule pièce avec des éléments d'arrêt (7, 13) prévus pour la fixation avec d'autres composants et des éléments de retenue (6).

4. Procédé pour la fabrication de la pompe à jet aspirant avec une conduite de fluide moteur conforme à l'une des revendications 1 à 3, au cours duquel de la matière plastique en fusion est injectée dans un moule prévu à cet effet, le moule est rempli complètement avec la matière plastique en fusion et, après un refroidissement de la matière plastique au niveau de la paroi du moule, la matière plastique liquide qui se trouve au centre du moule est éjectée par un fluide gazeux ou liquide sous haute pression.

5. Procédé pour la fabrication de la pompe à jet aspirant avec une conduite de fluide moteur conforme à l'une des revendications précédentes 1 à 3, au cours duquel une pièce brute en forme de tuyau flexible de la conduite de fluide moteur est gonflée à l'intérieur du moule, la pièce brute étant fabriquée avec la longueur de la conduite de fluide moteur et étant préfaçonnée d'une façon adéquate à l'extérieur du moule de la conduite de fluide moteur, avant d'être gonflée dans le moule.
